# EUROPÄISCHE PATENTSCHRIFT

(11) **EP 3 553 621 B1**
(45) Veröffentlichungstag und Bekanntmachung des Hinweises auf die Patenterteilung: **02.06.2021**
(21) Anmeldenummer: 19169104.7
(22) Anmeldetag: 12.04.2019
(51) Int. Cl.: E01H 1/02, E01H 1/05, B60W 60/00, G05D 1/02

(54) **STRASSENKEHRMASCHINENSYSTEM**
ROAD SWEEPER SYSTEM
SYSTÈME DE BALAYEUSE ROUTIÈRE

(30) Priorität: 13.04.2018 DE 102018003032; 18.10.2018 DE 102018008269
(43) Veröffentlichungstag der Anmeldung: 16.10.2019
(73) Patentinhaber: Hako GmbH, 23843 Bad Oldesloe (DE)
(72) Erfinder: WOLF, Daniel, 88048 Friedrichshafen (DE); WITTE, Cornelius, 88085 Langenargen (DE); GÖTZ, Manuel, 88213 Ravensburg (DE); VOLPERT, Bastian, 88048 Friedrichshafen-Kluftern (DE); BAVENDIEK, Rainer, 21465 Wentorf (Schleswig-Holstein) (DE); JESKE, Carsten, 23843 Bad Oldesloe (DE); GEBHARDT, Sven, 99817 Eisenach (DE)
(74) Vertreter: Bird & Bird LLP

(56) Entgegenhaltungen:
- EP-A2- 2 583 608
- EP-A2- 3 123 915
- WO-A1-2018/013538
- WO-A1-2019/020138
- WO-A2-2016/198044
- DE-T2- 69 119 491
- ES-U- 1 139 908

## Beschreibung

Die vorliegende Erfindung betrifft ein Straßenkehrmaschinensystem umfassend eine Straßenkehrmaschine und eine Kehreinheit.

Reinigungsgeräte, Bauweisen und Verfahren für Kehrmaschinen sind z.B. aus den Patentschriften EP1985220B1, DE102013204407B4, EP1715103B1, oder den Patentanmeldungen DE4414628A1, US2008201878A, CN102277843A oder dem chinesischen Gebrauchsmuster CN204608661U bekannt.

Ferner sind autonome Reinigungsgeräte für den Innenraum privater Haushalte bekannt, z.B. aus der US-Patentanmeldung US2007234492A oder dem chinesischen Gebrauchsmuster CN204091891 U.

Auch autonom oder zumindest teilautonom fahrende Straßenkehrmaschinen im Außenbereich sind bekannt. ES1139908 und WO 2019/020138 A1 offenbaren beispielsweise eine autonome Kehrmaschine, welche der Person, dem sogenannten Beikehrer, folgt. Auch die DE 603 190 77 T2 offenbart eine Kehrmaschine, welche von einem Beikehrer steuerbar ist. Die DE 602 22 062 T2 und die DE 689 08 878 T2 offenbaren eine Kehrmaschine, welche autonom Kehrgut aus schlecht zugänglichen Bereichen der Kehrmaschine zuführt. Auch bei der WO2010/086777A1 steht ein Beikehrer mit einer Kehrmaschine in Verbindung und fördert Kerhgut zur Kehrmaschine.

Der Fahrerarbeitsplatz nimmt bei kleinen, wendigen Maschinen für den Außenbereich einen großen Teil der Maschine ein. Um für eine Maschine mit angemessenem Fahrerarbeitsplatz die erforderliche Wendigkeit zu erreichen, sind komplexe knickgelenkte Fahrzeuge notwendig. Ferner müssen Straßenarbeiter zusätzlich zur Maschine eingesetzt werden, die Schmutz, Laub, Müll etc. aus Bereichen, die mit Reinigungsfahrzeugen nicht oder nur schwer befahrbar sind, in die Reichweite der Maschine zu kehren oder blasen, z.B. aus Ecken oder Grünflächen. Für den Arbeitseinsatz sind deshalb meist Straßenarbeiter zusätzlich zur Straßenkehrmaschine notwendig. Dies ist einerseits wegen den benötigten Arbeitskräften teuer, als auch wegen der technischen Komplexität des Aufbaus der Straßenkehrmaschine.

Deshalb ist es eine Aufgabe dieser Erfindung, ein verbessertes Straßenkehrmaschinensystem bereitzustellen. Ziel ist es also, eine weniger komplexe Straßenkehrmaschine bereitzustellen, welche mit möglichst wenigen Arbeitern bzw. Personen bedient werden muss. Diese Aufgabe wird erfindungsgemäß durch die Merkmale des unabhängigen Patentanspruchs gelöst. Vorteilhafte Ausgestaltungen sind Gegenstand der abhängigen Ansprüche.

Bereitgestellt wird eine Straßenkehrmaschine, aufweisend zumindest ein Kehrmittel, das dazu eingerichtet ist, zumindest ein Objekt in seiner Reichweite derart zur Straßenkehrmaschine zu bewegen, dass dieses in die Straßenkehrmaschine aufgenommen werden kann. Die Straßenkehrmaschine weist zumindest ein Steuergerät auf, das dazu eingerichtet ist, zumindest die Straßenkehrmaschine und das zumindest eine Kehrmittel zu steuern, sowie zumindest eine Erfassungseinheit.

Bei der zumindest einen Erfassungseinheit handelt es sich um eine Umfelderfassungseinheit Es sind auch Ausführungen denkbar, bei denen eine Umfelderfassungseinheit und eine Positionserfassungseinheit vorgesehen sind. Die Umfelderfassungseinheit ist zur Erfassung des Umfelds der Straßenkehrmaschine eingerichtet, wodurch unter anderem eine relative Position der Kehrmaschine zu der Kehreinheit, der Kehrvorrichtung und/oder einer ein Kehrgerät führenden Person bestimmt werden kann. Im Gegensatz dazu ist die Positionserfassungseinheit dazu eingerichtet, die absolute Position der Straßenkehrmaschine zu ermitteln. Unter einer absoluten Position ist beispielsweise eine mittels Koordinaten exakt bestimmbare Position in einem Umfeld zu verstehen, beispielsweise eine Positionsbestimmung mittels GPS-Daten. Dabei kann die Positionserfassungseinheit eigene Mittel zur Positionserfassung aufweisen oder Mittel zur Umfelderfassung oder Signale der Umfelderfassungseinheit verwenden.

Außerdem weist die Straßenkehrmaschine zumindest eine Kommunikationseinheit auf, die dazu eingerichtet ist, mit einem externen System derart zu kommunizieren, dass die Straßenkehrmaschine basierend auf von dem externen System erhaltenen Informationen zumindest teilautonom geführt werden kann. Die Straßenkehrmaschine folgt einer von der Umfelderfassungseinheit erfassten Kehreinheit in einem definierten Abstand, wobei die Kehreinheit dazu eingerichtet ist, zumindest ein weiteres Objekt aus Bereichen außerhalb der Reichweite des Kehrmittels in Reichweite des Kehrmittels zu bringen. Oder die Straßenkehrmaschine ist gemäß einer nicht zur Erfindung gehörigen Alternative mit einer zusätzlichen Kehrvorrichtung ausgestattet, die derart gesteuert ist, dass sie zumindest ein von der Umfelderfassungseinheit erfasstes weiteres Objekt aus Bereichen außerhalb der Reichweite des Kehrmittels in Reichweite des Kehrmittels bringen kann.

Durch die Bereitstellung einer zumindest teilweise autonom fahrenden Straßenkehrmaschine kann wenigstens eine Person, hier der Fahrer, eingespart werden. Durch die zusätzliche autonom fahrende Kehreinheit als Bestandteil des Straßenkehrmaschinensystems, welcher die Straßenkehrmaschine in einem vorgegebenen Abstand ebenfalls autonom hinterherfährt kann mindestens eine weitere Person eingespart werden, oder diese Person kann andere Aufgaben erfüllen. Dasselbe trifft zu, wenn eine zusätzliche an der Straßenkehrmaschine angeordnete Kehrvorrichtung vorgesehen ist. Somit wird sowohl der Aufbau der Straßenkehrmaschine vereinfacht als auch Kosten gespart.

In einer nicht zur Erfindung gehörigen Ausführung ist die Kehreinheit eine Person, welche ein Kehrgerät führt. Erfindungsgemäß ist die Kehreinheit eine autonom fahrende Kehreinheit, umfassend ein Kehrgerät. Je nachdem in welchem Umfeld die Straßenkehrmaschine eingesetzt wird, kann ausgewählt werden, ob ein Mensch oder eine Maschine als Kehreinheit eingesetzt wird. Der Einsatz einer Maschine ist z.B. beim Einsatz in gefährlichen Bereichen wie Autobahnen oder Gebieten mit hoher Kriminalität, oder bei sehr schlechten Wetterverhältnissen oder im Fall, dass keine Arbeitskraft verfügbar ist, von Vorteil. Der Einsatz von Menschen ist in Bereichen, in denen z.B. zusätzlich noch Mülleimer geleert, Parkbänke gesäubert oder Gullis ausgeräumt werden müssen, vorteilhaft.

In einer Ausführung ist das externe System zumindest ein Transponder oder Bewegungssensor, durch welchen die Position der Kehreinheit und/oder des Kehrgeräts bestimmbar ist, wobei die Straßenkehrmaschine basierend auf dem Vergleich der erfassten Position der Straßenkehrmaschine und der Kehreinheit und/oder des Kehrgeräts im vorgegebenen Abstand zur Kehreinheit und/oder zum Kehrgerät geführt wird. Vorteilhafterweise ist der zumindest eine Transponder oder Bewegungssensor an oder in einem Kleidungsstück der Person oder an einem Bereich der Kehreinheit oder an einem Bereich des Kehrgeräts angeordnet.

Durch Anbringen entsprechender Sensorik etc. kann ein automatisiertes Führen der Straßenkehrmaschine in einem vorgegebenen Abstand zur Kehreinheit erfolgen, ohne dass eine manuelle Anpassung erfolgen muss, welche in der Regel fehleranfällig ist.

In einer Ausführung umfassen vorgegebene Funktionen der Straßenkehrmaschine zumindest Einschalten, Ausschalten, Not-Aus, Geschwindigkeit, vorgegebener Abstand zur Kehreinheit und/oder zum Kehrgerät, wobei die Funktionen zusätzlich manuell über einen an der Person oder der Kehreinheit oder dem Kehrgerät angebrachten Bedienelement, oder z.B. durch die Umfelderfassungseinheit durch Erfassen der Gestik der Person und/oder der Blickrichtung der Person und/oder der Bewegung der Kehreinheit und/oder des Kehrgeräts einstellbar sind.

Je nach Ausstattung der Straßenkehrmaschine können also unterschiedliche Bedienkonzepte realisiert werden.

In einer Ausführung ist die Straßenkehrmaschine dazu eingerichtet, vorgegebene Aufgaben unabhängig von der Kehreinheit durchzuführen. Somit können Aufgaben ohne dass Personen zum Steuern nötig sind ausgeführt werden, so dass die eingesparte Arbeitskraft andere Aufgaben erfüllen kann. Dies erhöht die Auslastung der Straßenkehrmaschine und senkt damit die Kosten.

In einer nicht zur Erfindung gehörigen Ausführung ist in einem Fall das externe System ein Teil der Straßenkehrmaschine, insbesondere eine an der Straßenkehrmaschine angeordnete Sensorik, und dazu eingerichtet ist, ein weiteres Objekt außerhalb der Reichweite des Kehrmittels zu erfassen und derart mit der Straßenkehrmaschine zu kommunizieren, dass die zusätzlichen Kehrvorrichtung gesteuert wird, um das weitere Objekt aus dem Bereich außerhalb der Reichweite des Kehrmittels in Reichweite des Kehrmittels zu bringen. Durch Verwenden von zusätzlicher Sensorik kann die Straßenkehrmaschine selbständig Schmutz finden und zu diesem fahren, um ihn aufzusammeln.

In einer Ausführung erfasst die Positionserfassungseinheit zusätzlich die Position der Kehreinheit und/oder des Kehrgeräts. Somit kann eine genauere Positionserfassung, z.B. über Satelliten gestützte Erfassung, erfolgen.

In einer Ausführung ist die Umfelderfassungseinheit ferner dazu eingerichtet, einen Verschmutzungsgrad zu erfassen und die Leistung der Kehreinheit und/oder der Kehrvorrichtung und/oder des Kehrmittels und/oder des Kehrgeräts an den erfassten Verschmutzungsgrad anzupassen. Durch Erfassen des Verschmutzungsgrads und damit Anpassen der verwendeten Energie kann Treibstoff bzw. elektrische Energie eingespart werden. Somit ist auch ein Effekt für den Umweltschutz erreicht.

In einer Ausführung ist die Straßenkehrmaschine ein elektrisch angetriebenes Fahrzeug.

In einer Ausführung ist die Straßenkehrmaschine derart mit zumindest einem Assistenzsystem ausgestattet, dass sie teilautonom derart geführt wird, dass eine Kollision mit einem Hindernis vermieden wird.

In einer Ausführung umfasst die Straßenkehrmaschine ferner Mittel, durch welche Daten einer Überwachung des Umfelds der Straßenkehrmaschine bereitgestellt werden, wobei die Kommunikationseinrichtung ferner dazu eingerichtet ist, die Daten an ein externes Überwachungssystem zu senden. Somit kann die Straßenkehrmaschine eine weitere Funktion übernehmen und es können ohne große Umrüstmaßnahmen Kosten gespart werden.

Weitere Merkmale und Vorteile der Erfindung ergeben sich aus der nachfolgenden Beschreibung von Ausführungsbeispielen der Erfindung, anhand der Figuren der Zeichnung, die erfindungsgemäße Einzelheiten zeigt, und aus den Ansprüchen. Die einzelnen Merkmale können je einzeln für sich oder zu mehreren in beliebiger Kombination bei einer Variante der Erfindung verwirklicht sein.

Bevorzugte Ausführungsformen der Erfindung werden nachfolgend anhand der beigefügten Zeichnung näher erläutert.
Fig. 1 zeigt eine Darstellung einer Straßenkehrmaschine gemäß einer nicht zur Erfindung gehörigen Ausführung.
Fig. 2 zeigt eine Darstellung einer Straßenkehrmaschine gemäß einer Ausführung der vorliegenden Erfindung.
Fig. 3 zeigt eine Darstellung einer Straßenkehrmaschine gemäß einer weiteren nicht zur Erfindung gehörigen Ausführung.

In den nachfolgenden Figurenbeschreibungen sind gleiche Elemente bzw. Funktionen mit gleichen Bezugszeichen versehen.

Zur Lösung des oben genannten Problems wird eine autonome Straßenkehrmaschine 100 vorgeschlagen, bei der ein fester Fahrerplatz in Form einer Kabine nicht unbedingt vorgesehen ist. Somit fährt die vorgeschlagene Straßenkehrmaschine 100 zumindest teilautonom.

Straßenkehrmaschinen 100 sind in der Regel mit zumindest einem Kehrmittel 101 ausgestattet, das dazu eingerichtet ist, zumindest ein Objekt 301 in seiner Reichweite derart zur Straßenkehrmaschine 100 zu bewegen, dass dieses in die Straßenkehrmaschine 100 aufgenommen werden kann.

Meistens sind mehrere Kehrmittel (nicht gezeigt) an unterschiedlichen Bereichen der Straßenkehrmaschine 100 angeordnet, z.B. vorne und seitlich. Die Kehrmittel 101 sind in der Regel als rotierende Rundbürsten ausgeführt, können aber auch eine andere Form aufweisen. Jedes Kehrmittel 101 kann einen Bereich in seiner Reichweite kehren, teils auch zusätzlich befeuchten. Die zu kehrenden Objekte 301 werden in einen Bereich der Straßenkehrmaschine 100 gekehrt, der zum Aufsammeln dient. Das Aufsammeln wird über eine Sammeleinheit getätigt.

Allerdings können die Kehrmittel 101 aufgrund ihrer Form, des Orts der Anbringung und der räumlichen Ausdehnung der Straßenkehrmaschine 100 nicht alle Bereiche erreichen, in welchen sich zu kehrende Objekte 301, 302 befinden. Deshalb wird häufig zusätzlich zum Fahrer, der die Straßenkehrmaschine 100 fährt, mindestens eine weitere Person 200 abgestellt, welche vor der Straßenkehrmaschine 100 herläuft und Objekte aus von den Kehrmitteln 101 nicht oder schwer erreichbaren Bereichen in Reichweite der Kehrmittel 101 kehrt, der sogenannte Beikehrer. Solche nicht oder schwer erreichbare Bereiche sind z.B. Bordsteinkanten, Grünflächen, Ecken, Rillen etc.

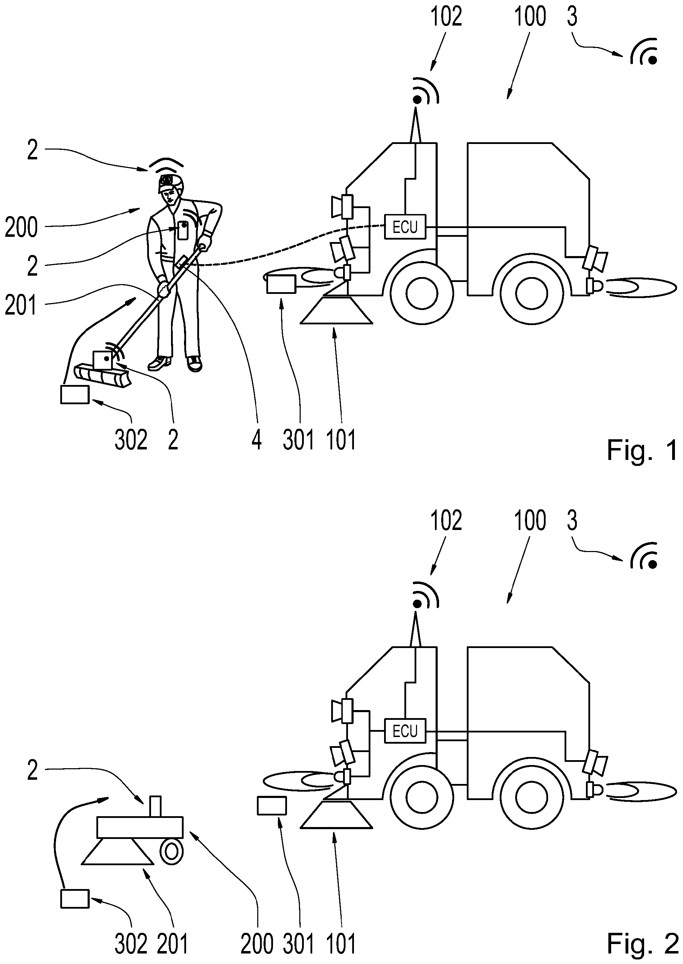

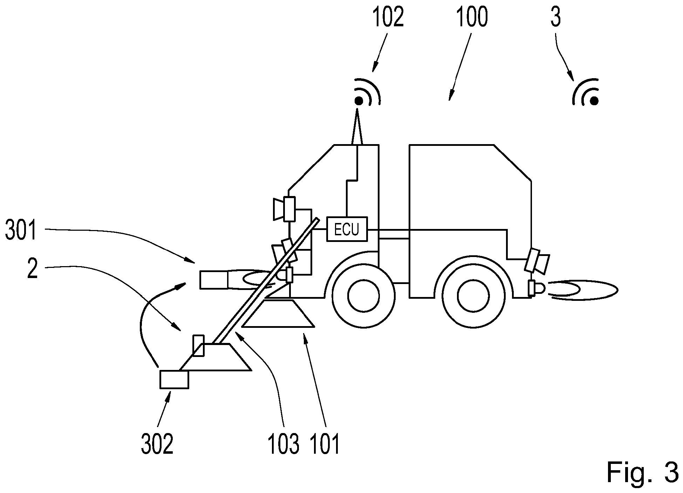

Ziel der Erfindung ist es, Arbeitskräfte einzusparen oder anders einzusetzen, und den Aufbau von Straßenkehrmaschinen 100 zu vereinfachen. Dies wird durch die nachfolgend beschriebene und in Figuren 1 bis 3 in unterschiedlichen Ausführungen gezeigte zumindest teilautonom betriebene Straßenkehrmaschine 100 ermöglicht, wobei jedoch nur die Ausführung der Figur 2 erfindungsgemäß ist.

Wenn kein Fahrerplatz vorgesehen ist, kann die Straßenkehrmaschine 100 aufgrund des Raumgewinns einfacher und kompakter aufgebaut werden, d.h. mit einem kürzeren Radstand bei gleicher Kehr- und Sammelleistung. Somit werden Kosten gespart und eine bisher zum Fahren der Straßenkehrmaschine 100 benötigte Person kann für andere Arbeiten eingesetzt werden.

Um einen zumindest teilautonomen Betrieb zu ermöglichen ist die Straßenkehrmaschine 100 in allen Ausführungen zumindest mit einem zentralen Steuergerät ECU zur Steuerung zumindest der Grundfunktionen der Straßenkehrmaschine 100 ausgestattet. Das Steuergerät ECU kann zusätzlich weitere unterschiedlichste Funktionen erfüllen. Unter anderem kann es als eine Umfelderfassungseinheit ausgebildet sein oder mit einer Umfelderfassungseinheit verbunden sein, so dass aus Umfeldsensorik erhaltene Daten entsprechend verarbeitet werden, um eine Erfassung des Umfelds der Straßenkehrmaschine 100 zu erreichen, d.h. dass zu kehrende Objekte 301, 302 wie Hindernisse, Straßenbeschaffenheit oder auch vorhandener Schmutz erfasst werden. Ferner kann es auch die Funktion einer Positionserfassungseinheit ausführen, d.h. entweder direkt als Ortungssystem prinzipiell beliebiger Art gebildet sein oder Daten von entsprechenden Positionserfassungsmitteln wie GPS, Sensoren etc. erhalten und entsprechend verarbeiten, so dass die Position der Straßenkehrmaschine 100 daraus ermittelt wird. So kann auch die Kehreinheit 200 z.B. mit einem Transponder ausgestattet sein, durch welchen die Position der Kehreinheit 200 und/oder des Kehrmittels 101 an die Straßenkehrmaschine 100 übertragen wird.

Ferner kann das Steuergerät ECU auch als eine Kommunikationseinheit ausgebildet sein oder mit einem entsprechenden Kommunikationsmittel in Verbindung stehen, so dass sie als Verbindung zu einem externen System dient. Das externe System kann dabei sowohl ein an der Kehreinheit 200 angeordnetes Kommunikationsmittel wie ein Transponder 2 oder Bewegungssensor 2 sein, als auch ein zentrales Arbeitsauftrags-Managementsystem 3, auch als ERP- oder MES-System bezeichnet, oder ein Leitsystem 3, oder eine Kombination daraus sein. Die Straßenkehrmaschine 100 kann basierend auf von den externen System 2, 3 erhaltenen Informationen zumindest teilautonom geführt werden. Ein Transponder kann z.B. in einem Kehrgerät 201, z.B. einem von einer Person handgeführten Arbeitsgerät wie einem Besen oder einem Laubbläser, oder der Bekleidung, auch an einer Brille oder einem Helm, der Person befestigt sein. Auch kann ein mobiles Gerät wie ein Smartphone, eine Uhr, etc. über eine entsprechende Software z.B. eine App als Transponder, Bewegungssensor und zur Steuerung dienen.

Die Straßenkehrmaschine 100 folgt dabei erfindungsgemäß einer externen Kehreinheit 200, z.B. einem Kehrfahrzeug. Diese kehren Objekte 302, die nicht von den Kehrmitteln 101 erreicht werden können, in die Reichweite des oder der Kehrmittel 101. Oder die Straßenkehrmaschine 100 ist mit einer zusätzlichen Kehrvorrichtung 103 wie einem Kehrarm ausgestattet, wodurch zumindest ein weiteres Objekt 302 aus Bereichen außerhalb der Reichweite des Kehrmittels 101 in Reichweite des Kehrmittels 101 gebracht werden kann.

Die Straßenkehrmaschine 100 folgt einer externen Kehreinheit 200 wobei dies vorzugsweise in einem vorgegebenen Abstand erfolgt. Hierzu sind die externe Kehreinheit 200 oder die Straßenkehrmaschine 100 z.B. mit entsprechender Sensorik ausgestattet, um die externe Kehreinheit bzw. die Position oder Bewegung oder Bewegungsrichtung dieser zu erfassen und sich daran mit dem Abstand zu orientieren. Dies kann durch Informationen aus der Umgebungserfassungseinheit und/oder der Positionserfassungseinheit, erfolgen. Die Kommunikation, Positionserfassung sowie das Hinterherfahren können drahtlos erfolgen. Somit ist keine z.B. kabelgebundene Verbindung zwischen Straßenkehrmaschine 100 und Kehreinheit 200 nötig, was den Aufbau vereinfacht und ein potentielles Hängenbleiben an in dem zu kehrenden Bereich vorhandenen Hindernissen wie Pfosten etc. verringert, und somit auch die Unfallgefahr verringert.

Die Straßenkehrmaschine 100 kann mit unterschiedlichsten Mitteln zur Positionserfassung, zur Umfelderfassung und zur Kommunikation ausgestattet sein, z.B. mit einer oder mehreren Kameras, RADAR-Sensoren, LIDAR-Sensoren, PMD (optischer Lichttaster), Signalempfangseinheiten zur Erfassung der Kehreinheit, z.B. deren Bewegung über einen Gyro-Sensor, Gestik einer Person, Blickrichtung, wobei hierzu eine Brille verwendet werden kann, etc.. Vorteilhafterweise erfolgt die Positionserfassung sowohl der Straßenkehrmaschine 100 als auch der Kehreinheit 200 in Echtzeit, so dass die Wahrscheinlichkeit, mit einem nicht stationär vorhandenen Hindernis zusammenzustoßen, weiter verringert wird. Hierzu kann eine Satelliten gestützte oder GPS gestützte oder Sensor gestützte Positionserfassung oder eine Kombination daraus erfolgen.

Ferner kann die Straßenkehrmaschine 100 mit weiteren Funktionen ausgestattet sein, welche unter anderem zur Unterstützung der Sicherheit dienen können. Solche Funktionen sind z.B. eine manuelle Steuerung bestimmter Funktionalitäten der Straßenkehrmaschine 100 über ein Bedienelement wie einen Bedienknopf 4, mit der ein zeitlich befristeter, manueller Eingriff von außen möglich ist. Dies erfolgt wieder vorteilhafterweise drahtlos. Zur Steuerung der Funktionen kann statt einem drahtlos verbundenen Bedienknopf, der auf die Arbeitsmaschine wirkt, die Gestik der Person, eine vorgegebene definierte Bewegung des handgeführten Geräts (Gyro-Sensor) oder die Blickrichtung der Person genutzt werden, um z.B. einen Notstop, ein Aus- und Einschalten oder die Geschwindigkeit und den Abstand zum autonomen Folgen einzustellen.

Um Unfälle zu vermeiden muss die Umfelderfassung und damit die Positionserfassung den Nahbereich der Arbeitsumgebung abdecken, sowohl in der Höhe als auch in der Breite, so dass weder Passanten verletzt werden können, noch die Straßenkehrmaschine 100 durch Kollisionen mit anderen Hindernissen Schaden nehmen kann. Außerdem ist es vorteilhaft, wenn die Straßenkehrmaschine 100, aber auch die autonom fahrende Kehreinheit 200, mit einem Notbrems-System ausgestattet ist, durch welches ebenfalls Kollisionen verhindert werden können. Dies ist insbesondere vorteilhaft, da solche Systeme meist schneller reagieren als ein Mensch.

Ferner ist es vorteilhaft, wenn die Straßenkehrmaschine 100 mit einem oder mehreren Stabilisierungssystemen ausgestattet ist, so dass sie bei einer Kurvenfahrt stabilisiert werden und nicht umkippen kann.
Zur weiteren Verbesserung der Sicherheit sowohl für die Maschine als auch für die Umgebung kann die Straßenkehrmaschine 100 mit einer Speichereinheit ausgestattet sein, welche Kollisionen oder Unfälle abspeichert, so dass der Hergang nachvollzogen werden kann. Hierzu können auch (zusätzlich) vorhandene Umfelderfassungseinrichtungen wie Sensoren oder Kameras herangezogen werden, deren Daten ebenfalls abgespeichert werden.

Zusätzlich zur Kehrfunktion kann die Straßenkehrmaschine 100 auch eine Überwachungsfunktion erfüllen. Da die Straßenkehrmaschine 100 mit einer Kommunikationseinheit 102 und entweder mit zumindest einer Kamera ausgestattet oder ausstattbar ist, kann die Straßenkehrmaschine 100 auch Überwachungsbilder an eine entsprechende externe Einrichtung senden. Dies kann besonders vorteilhaft sein, wenn die Straßenkehrmaschine 100 in Bereichen mit eingeschränkter Einfahrtserlaubnis für Fahrzeuge etc., also in sogenannte Restricted Areas, z.B. den Freihafen Hamburg, auf Werksgelände etc. im voll autonomen Betrieb eingesetzt wird. Somit kann die Straßenkehrmaschine 100 auch als Wacheinheit dienen.

Vorteilhafterweise ist die Straßenkehrmaschine 100 derart ausgerüstet, dass sie z.B. durch die Umfelderfassungseinheit vorhandenen Schmutz erfassen kann und dann autonom dorthin fährt, um ihn aufzusammeln. In dieser Zeit kann die Kehreinheit 200 andere Aufgaben erfüllen, z.B. Schmutz von Parkbänken saugen, Mülleimer leeren, Gullis leeren etc. Das heißt, dass sich die Straßenkehrmaschine 100 auch unabhängig von der Kehreinheit 200 bewegen kann, so dass umfangreichere Funktionen erfüllt werden können. Das unabhängige Bewegen kann so weit gehen, dass die Straßenkehrmaschine 100 selbständig zur Entleerung fährt und die Kehreinheit 200 in der Zwischenzeit weiter arbeitet, um Schmutz in die richtige Position zu bringen oder andere Aufgaben zu erfüllen, z.B. Bänke abkehren, Mülleimer leeren, Gullis ausräumen etc.

Vorteilhaft ist ferner, wenn die Straßenkehrmaschine 100 derart ausgerüstet ist, dass sie ihren Energiebedarf auf das maximal Notwendige einstellen kann, z.B. die Kehrleistung in Abhängigkeit von der Art und/oder Höhe der Verschmutzung erhöhen oder reduzieren. Dies geschieht vorzugsweise, indem das System aus vergangenen Fahrten lernt. So können Zigarettenkippen, Kronkorken und leere Flaschen erkannt werden und der Energiebedarf entsprechend eingestellt werden. Es kann auch eine Vorgabe aufgrund Erfahrungswerte von extern erfolgen.

Grundsätzlich kann das beschriebene System auch für andere Aufgaben verwendet werden als für Kehrfunktionen. So kann die Straßenkehrmaschine 100 z.B. auch für ein Mähen oder eine Kombination aus Kehren und nass reinigen oder ein Salzen oder Streuen, wenn sie entsprechend umgerüstet wird.

### Bezugszeichen

- 100: Straßenkehrmaschine
- 101: Kehrmittel
- 102: Kommunikationseinheit
- 103: Kehrvorrichtung
- 200: Kehreinheit
- 201: Kehrgerät
- 301, 302: zu kehrendes Objekt
- 2, 3: externes System
- 4: Bedienelement
- ECU: Steuergerät

## Patentansprüche

1. Straßenkehrmaschinensystem umfassend eine Straßenkehrmaschine (100) und eine Kehreinheit (200), wobei die Straßenkehrmaschine (100) aufweist:
- zumindest ein Kehrmittel (101), das dazu eingerichtet ist, zumindest ein Objekt (301) in seiner Reichweite derart zur Straßenkehrmaschine (100) zu bewegen, dass dieses in die Straßenkehrmaschine (100) aufgenommen werden kann,
- zumindest ein Steuergerät (ECU), das dazu eingerichtet ist, zumindest die Straßenkehrmaschine (100) und das zumindest eine Kehrmittel (101) zu steuern,
- zumindest eine Erfassungseinheit, die zur Erfassung des Umfelds und vorzugsweise zur Ermittlung der Position der Straßenkehrmaschine (100) eingerichtet ist,
- zumindest eine Kommunikationseinheit (102), die dazu eingerichtet ist, mit einem externen System (2; 3) derart zu kommunizieren, dass die Straßenkehrmaschine (100) basierend auf von dem externen System (2; 3) erhaltenen Informationen zumindest teilautonom geführt werden kann,
wobei die Straßenkehrmaschine (100) dazu eingerichtet ist, der von der Umfelderfassungseinheit erfassten Kehreinheit (200) in einem definierten Abstand zu folgen und wobei die Kehreinheit (200) dazu eingerichtet ist, zumindest ein weiteres Objekt (302) aus Bereichen außerhalb der Reichweite des Kehrmittels (101) in Reichweite des Kehrmittels (101) zu bringen,
**dadurch gekennzeichnet, dass**
die Kehreinheit (200) eine autonom fahrende Kehreinheit (200) umfassend ein Kehrgerät (201) ist.

2. Straßenkehrmaschinensystem nach Anspruch 1, wobei das externe System (2; 3) zumindest ein Transponder oder Bewegungssensor ist, durch welchen die Position der Kehreinheit (200) und/oder des Kehrgeräts (201) bestimmbar ist, wobei die Straßenkehrmaschine (100) dazu eingerichtet ist, basierend auf dem Vergleich der erfassten Position der Straßenkehrmaschine (100) und der Kehreinheit (200) und/oder des Kehrgeräts (201) im vorgegebenen Abstand zur Kehreinheit (200) und/oder zum Kehrgerät (201) geführt zu werden.

3. Straßenkehrmaschinensystem nach Anspruch 2, wobei der zumindest eine Transponder (2) oder Bewegungssensor (2) an einem Bereich der Kehreinheit (200) oder an einem Bereich des Kehrgeräts (201) angeordnet ist.

4. Straßenkehrmaschinensystem nach einem der Ansprüche 1 bis 3, wobei vorgegebene Funktionen der Straßenkehrmaschine (100) zumindest Einschalten, Ausschalten, Not-Aus, Geschwindigkeit, vorgegebener Abstand zur Kehreinheit (200) und/oder zum Kehrgerät (201) umfassen, wobei die Funktionen zusätzlich
- manuell über ein an der Kehreinheit (200) oder dem Kehrgerät (201) angebrachtes Bedienelement (4), oder
- durch die Umfelderfassungseinheit durch Erfassen der Bewegung der Kehreinheit (200) und/oder des Kehrgeräts (201) einstellbar sind.

5. Straßenkehrmaschinensystem nach einem der Ansprüche 1 bis 4, wobei die Straßenkehrmaschine (100) dazu eingerichtet ist, vorgegebene Aufgaben unabhängig von der Kehreinheit (200) durchzuführen.

6. Straßenkehrmaschinensystem nach einem der vorhergehenden Ansprüche, wobei die Positionserfassungseinheit dazu eingerichtet ist, zusätzlich die Position der Kehreinheit (200) und/oder des Kehrgeräts (201) zu erfassen.

7. Straßenkehrmaschinensystem nach einem der vorhergehenden Ansprüche, wobei die Umfelderfassungseinheit ferner dazu eingerichtet ist, einen Verschmutzungsgrad zu erfassen und die Leistung der Kehreinheit (200) und/oder des Kehrmittels (101) und/oder des Kehrgeräts (201) an den erfassten Verschmutzungsgrad anzupassen.

8. Straßenkehrmaschinensystem nach einem der vorhergehenden Ansprüche, wobei die Straßenkehrmaschine (100) ein elektrisch angetriebenes Fahrzeug ist.

9. Straßenkehrmaschinensystem nach einem der vorhergehenden Ansprüche, wobei die Straßenkehrmaschine (100) derart mit zumindest einem Assistenzsystem ausgestattet ist, dass sie teilautonom derart geführt wird, dass eine Kollision mit einem Hindernis vermieden wird.

10. Straßenkehrmaschinensystem nach einem der vorhergehenden Ansprüche, wobei die Straßenkehrmaschine (100) ferner Mittel umfasst, durch welche Daten einer Überwachung des Umfelds der Straßenkehrmaschine bereitgestellt werden, wobei die Kommunikationseinheit ferner dazu eingerichtet ist, die Daten an ein externes Überwachungssystem zu senden.

## Claims

1. Road sweeping machine system comprising a road sweeping machine (100) and a sweeping unit (200), wherein the road sweeping machine (100) has:
- at least one sweeping means (101) which is configured to move at least one object (301) in its range with respect to the road sweeping machine (100) in such a way that it can be accommodated in the road sweeping machine (100),
- at least one control unit (ECU) which is configured to control at least the road sweeping machine (100) and the at least one sweeping means (101),
- at least one sensing unit which is configured to sense the surroundings and preferably to determine the position of the road sweeping machine (100),
- at least one communication unit (102) which is configured to communicate with an external system (2; 3) in such a way that the road sweeping machine (100) can be guided at least partially autonomously on the basis of information received from the external system (2; 3),
- wherein the road sweeping machine (100) is configured to follow, at a defined distance, the sweeping unit (200) which is sensed by the surroundings-sensing unit, and wherein the sweeping unit (200) is configured to move at least one further object (302) from regions outside the range of the sweeping means (101) into the range of the sweeping means (101), **characterized in that**
the sweeping unit (200) is an autonomously driving sweeping unit (200) comprising a sweeping apparatus (201) .

2. Road sweeping machine system according to Claim 1, wherein the external system (2; 3) is at least one transponder or movement sensor by which the position of the sweeping unit (200) and/or of the sweeping apparatus (201) can be determined, wherein the road sweeping machine (100) is configured to be guided at a predefined distance from the sweeping unit (200) and/or from the sweeping apparatus (201) on the basis of the comparison of the sensed position of the road sweeping machine (100) and of the sweeping unit (200) and/or of the sweeping apparatus (201) .

3. Road sweeping machine system according to Claim 2, wherein the at least one transponder (2) or movement sensor (2) is arranged on an area of the sweeping unit (200) or on an area of the sweeping apparatus (201) .

4. Road sweeping machine system according to one of Claims 1 to 3, wherein specified functions of the road sweeping machine (100) comprise at least switching on, switching off, emergency off, speed, predefined distance from the sweeping unit (200) and/or from the sweeping apparatus (201), wherein the functions can be additionally set
- manually by means of an operator control element (4) which is mounted on the sweeping unit (200) or on the sweeping apparatus (201), or
- by the surroundings-sensing unit by sensing the movement of the sweeping unit (200) and/or of the sweeping apparatus (201).

5. Road sweeping machine system according to one of Claims 1 to 4, wherein the road sweeping machine (100) is configured to carry out predefined tasks independently of the sweeping unit (200).

6. Road sweeping machine system according to one of the preceding claims, wherein the position-sensing unit is configured to additionally sense the position of the sweeping unit (200) and/or of the sweeping apparatus (201) .

7. Road sweeping machine system according to one of the preceding claims, wherein the surroundings-sensing unit is also configured to sense a degree of soiling and to adapt the power of the sweeping unit (200) and/or of the sweeping means (101) and/or of the sweeping apparatus (201) to the sensed degree of soiling.

8. Road sweeping machine system according to one of the preceding claims, wherein the road sweeping machine (100) is an electrically driven vehicle.

9. Road sweeping machine system according to one of the preceding claims, wherein the road sweeping machine (100) is equipped with at least one assistance system such that it is guided partially autonomously in such a way that a collision with an obstacle is avoided.

10. Road sweeping machine system according to one of the preceding claims, wherein the road sweeping machine (100) also comprises means by which data relating to the monitoring of the surroundings of the road sweeping machine is made available, wherein the communication unit is also configured to transmit the data to an external monitoring system.

## Revendications

1. Système de balayeuse routière, comprenant une balayeuse routière (100) et une unité de balayage (200), la balayeuse routière (100) présentant :
- au moins un moyen de balayage (101) qui est aménagé pour déplacer au moins un objet (301) dans son rayon d'action vers la balayeuse routière (100) de telle sorte que celui-ci puisse être ramassé dans la balayeuse routière (100),
- au moins un appareil de commande (ECU) qui est aménagé pour commander au moins la balayeuse routière (100) et ledit au moins un moyen de balayage (101),
- au moins une unité de détection qui est aménagée pour détecter l'environnement, et de préférence pour établir la position de la balayeuse routière (100),
- au moins une unité de communication (102) qui est aménagée pour communiquer avec un système externe (2 ; 3) de telle sorte que la balayeuse routière (100) peut être conduite de manière au moins semi-autonome sur la base d'informations obtenues du système externe (2 ; 3),
la balayeuse routière (100) étant aménagée pour suivre à une distance définie l'unité de balayage (200) détectée par l'unité de détection d'environnement, et l'unité de balayage (200) étant aménagée pour amener au moins un autre objet (302) provenant de zones hors du rayon d'action du moyen de balayage (101) dans le rayon d'action du moyen de balayage (101),
**caractérisé en ce que** l'unité de balayage (200) est une unité de balayage (200) à déplacement autonome et comprenant un équipement de balayage (201).

2. Système de balayeuse routière selon la revendication 1, dans lequel le système externe (2 ; 3) est au moins un transpondeur ou un capteur de mouvement qui permet de déterminer la position de l'unité de balayage (200) et/ou de l'équipement de balayage (201), la balayeuse routière (100) étant aménagée pour être conduite sur la base de la comparaison de la position détectée de la balayeuse routière (100) et de l'unité de balayage (200) et/ou de l'équipement de balayage (201) à la distance prédéfinie par rapport à l'unité de balayage (200) et/ou à l'équipement de balayage (201).

3. Système de balayeuse routière selon la revendication 2, dans lequel ledit au moins un transpondeur (2) ou capteur de mouvement (2) est disposé dans une zone de l'unité de balayage (200) ou dans une zone de l'équipement de balayage (201).

4. Système de balayeuse routière selon l'une quelconque des revendications 1 à 3, dans lequel des fonctions prédéfinies de la balayeuse routière (100) comprennent au moins une mise sous tension, une mise hors tension, un arrêt d'urgence, une vitesse, une distance prédéfinie par rapport à l'unité de balayage (200) et/ou à l'équipement de balayage (201), les fonctions étant en outre réglables
- manuellement par un élément de commande (4) fixé à l'unité de balayage (200) ou à l'équipement de balayage (201), ou
- par l'unité de détection d'environnement par la détection du déplacement de l'unité de balayage (200) et/ou de l'équipement de balayage (201).

5. Système de balayeuse routière selon l'une quelconque des revendications 1 à 4, dans lequel la balayeuse routière (100) est aménagée pour effectuer des tâches prédéfinies indépendamment de l'unité de balayage (200) .

6. Système de balayeuse routière selon l'une quelconque des revendications précédentes, dans lequel l'unité de détection de position est aménagée pour détecter en outre la position de l'unité de balayage (200) et/ou de l'équipement de balayage (201).

7. Système de balayeuse routière selon l'une quelconque des revendications précédentes, dans lequel l'unité de détection d'environnement est en outre aménagée pour détecter un degré d'encrassement et pour adapter la puissance de l'unité de balayage (200) et/ou du moyen de balayage (101) et/ou de l'équipement de balayage (201) au degré d'encrassement détecté.

8. Système de balayeuse routière selon l'une quelconque des revendications précédentes, dans lequel la balayeuse routière (100) est un véhicule électrique.

9. Système de balayeuse routière selon l'une quelconque des revendications précédentes, dans lequel la balayeuse routière (100) est équipée d'au moins un système d'assistance de telle sorte qu'elle est conduite de manière semi-autonome de façon à éviter une collision avec un obstacle.

10. Système de balayeuse routière selon l'une quelconque des revendications précédentes, dans lequel la balayeuse routière (100) comprend en outre des moyens qui fournissent des données d'une surveillance de l'environnement de la balayeuse routière, l'unité de communication étant en outre aménagée pour envoyer les données à un système de surveillance externe.
